Europäisches Patentamt

European Patent Office

Office européen des brevets

(11) Publication number: **0 397 512**

**A2**

(12) **EUROPEAN PATENT APPLICATION**

(21) Application number: **90305080.5**

(22) Date of filing: **11.05.90**

(51) Int. Cl.⁵: **G07F 7/10**

(30) Priority: **11.05.89 JP 117678/89**

(43) Date of publication of application:
**14.11.90 Bulletin 90/46**

(84) Designated Contracting States:
**DE FR GB IT**

(71) Applicant: **MATERIAL ENGINEERING
TECHNOLOGY LABORATORY, INC.
21-13, Ohhara 2-chome
Setagaya-ku, Tokyo 156(JP)**

Applicant: **DAC INC.
27-15 Ohji 1-chome**

Kita-ku, Tokyo(JP)

Applicant: **NIHON CARD TRANSFER CORP.
3rd Floor, Kohjimachi Sukuea Bldg., 3
Kohjimachi 3-chome
Chiyoda-ku, Tokyo(JP)**

(72) Inventor: **Isono, Keinosuke
46-112, Ohaza-Angyoutouhachi
Kawaguchi-shi, Saitama-ken(JP)**

(74) Representative: **Hughes, Brian Patrick et al
Graham Watt & Co. Riverhead
Sevenoaks, Kent TN13 2BN(GB)**

(54) **Method for preventing the unauthorized/illegal use of card-type information medium.**

(57) Discrete identification data is registered in a card-type information medium, and stored in advance in a host computer connected with a reader/writer of said medium, for processing data in accordance with an object of said medium. When the medium is used, the data including said identification data is read by the reader/writer and are transmitted to the host computer, which then compares the transmitted identification data with that stored therein, and if both data coincide, initiates a predetermined procedure. Subsequently, when the procedure is finished, the host computer alters at least a protion of the identification data erases the identification data prior to alteration and stores the altered identification data therein. The reader/writer also rewirtes the identification data registered in medium by the altered identification data. The rewriting of the identification data is performed whenever the medium is used.

**FIG. 1**

# METHOD FOR PREVENTING THE UNAUTHORIZED/ILLEGAL USE OF CARD-TYPE INFORMATION MEDIUM

## Background of the Invention

The present invention relates to a method for preventing the unauthorized/illegal use of card-type information mediums such as credit cards, cash cards, prepaid cards and the like.

Heretofore, credit cards and cash cards have been used to purchase various articles of merchandise in the case no money being available, and to withdraw money from a bank, respectively. These cards function as an information medium when confirming that the person using the card is the person actually registered with the company which issued the card, or is the person who actually opened the account with the bank. This confirmation is executed by the following methods:

1) It is assumed that possession of a card per se is evidence that the cardholder is the card owner.

2) A card user is required to sign his name when using the card, and the person dealing with the user confirms the signature.

3) A password for confirmation is further registered on the card, and it is assumed that only the card owner and the company that issued the card know the password.

Recently, prepaid cards such as telephone cards and the like are being used in place of cash for the purchase of goods, services and the like. These prepaid cards function as an information medium indicating the amount of money to purchase the card and the amount of money remaining in the card.

The above confirmation methods for credit cards and cash cards have the following problems: According to method 1), the unauthorized use of a card cannot be prevented if the card is stolen. According to method 2), if the signature is similar to that of the card owner, the unauthorized use of the card also cannot be prevented, because it may be impossible to discriminate between two signatures when the card is used. Method 3), utilizing a password, is more secure in confirming the card owner than the former two methods, as long as the password is not known by a third party. However, according to this method, the procedure for issuing the card is complicated, and there is a risk that, if a complicated password is registered, it will be foregotten, so that a simpler password might be necessary. A combination of numerals, such as a telephone number or birthdate is often used as the password. This allows a third party to guess the password relatively easily. Therefore, in method 3), there is also the danger of the unauthorized use of the card. Further, since the primary object of a password is basically to prevent the unauthorized use of a card by a third party, the password is useless to prevent unauthorized use of the card by the card owner himself, i.e., by copying and forging the card.

In general, a magnetic card employing a magnetic recording is often used. In this case, since information is stored by means of changes of the magnetic materials, the stored contents of the card can be copied very easily. A card reader/writer for reading the stored content of a card and for writing data on the card is commercially available. Therefore, those having technical knowledges, including those in charge of the design and planning of card systems and of the manufacture of computer programs for card systems can easily copy and forge cards, and hence the method for preventing the unauthorized use of a card, by utilizing a password alone, is inadequate.

In addition, since no particular measures for preventing forgery are taken in the prepaid cards represented by telephone cards presently on the market, there arises the problem that prepaid cards can be easily copied and forged with the use of the card reader·writer and used without authorization. The prepaid card has a further problem in that the purchaser cannot be designated and any person who finds a prepaid card can use it. Although this problem can be relatively easily solved by utilizing a password, the wider distribution of cards is presently hindered because of the problems of the password itself in combiantion with the problems of copying and forging described above.

## Summary of the Invention

It is an object of the present invention to provide a method for virtually preventing the unauthorized/illegal use of a card-type information medium by a third party and by the copying and forging of the medium by the card owner himself.

According to the invention, there is provided a method for preventing the unauthorized/illegal use of a card-type information medium, the method comprising the steps of:
registering discrete identification data in a card-type information medium from which data can be read and on which data can be written,
storing in advance said identification data in a host compouter connected with a reader/writer of said information medium via a communication line, for processing data in line with an object of said information medium,
reading said information data from said information medium by means of said reader/writer when said information medium is used, to transmit said identification data to said host computer,

comparing in said host computer, said transmitted identification data with the identification data stored therein, and if both data coincide,

initiating in said host computer a predetermined procedure in accordance with said object of said information medium,

altering at least a portion of said identificaltion data, storing said altered identification data in said host computer in place of said identification data as a new identification data, and

rewriting by said reader/writer the said identification data stored in said information medium by said new identification data.

Alphanumeric and other symbols which make it possible to identify each cards, may also be employed as the identification (ID) data; however, numerals are preferable in view of the memory capacity of the host computer.

The ID data can be altered by the reader/writer of the information medium (card), based on an order from the host computer. Alternatively, they can also be altered by transmitting the altered data at the reader/writer to the host computer. In either case, it is essential that the altered ID data recorded in the card coincide with the ID data corresponding to the card, and stored in the host computer. Data on at least of a part of the portion of the ID data to be altered is preferably selected by random sampling of various data, because this makes foregery of the card more difficult. Further, at least a part of the portion of the ID data to be altered is preferably selected at random.

At least a portion of the data indicating the limit of the amount up to which card can be used, for example, at least a portion of the amount of money recorded in a prepaid card, should corresponded to at least the part of the portion of the ID data to be altered. In the method to select the data on at least a part of the portion of the ID data to be altered by random sampling, it is more difficult, although not impossible, to forge and use the card without authorization. In other words, in the case that one card is first copied in large quantities and the final two digits in the ID data consisting of a six-digit number are to be altered, if every conceivable combination of two digits (one hundred combinations) is made and inputted in the portion of the copied card to be altered, any one of the copied cards always becomes a card which can be used. For this reason, by utilizing all or a portion of the amount of money written in a card as the portion of the ID data to be altered, it is intended that the host computer will not permit a person to use more prepaid cards, whose total amount of money exceeds the amount of money when the prepaid is issued, based on the amount of money written in the card as the portion to be altered.

In order to prevent someone, other than the purchaser of the card who finds the card, from also using it without the permission of the purchaser, a password corresponding to the ID data is further registered when the card is issued, and the password is recorded in the host computer in such a manner that it corresponds to the ID data. The password is preferably not recorded in the card. The user inputs the password into the reader/writer when he uses a card. If the combination of the inputted password and the ID data does not coincide with that in the host computer, the host computer will not perform a predetermined procedure in accordance with the object of the card.

As described above, by registering discrete ID data in a card-type information medium and by performing the rewriting of the ID data whenever the information medium is used, unauthorized use of the information medium by various methods, including the medium owner himself copying and forging the medium, is virtually prevented, and such media can be utilized more securely and widely for various purposes.

The above and other objects, features and advantages of the present invention will become more apparent from the following description when taken in conjunction with the accompanying drawings in which a preferred embodiment of the present invention is shown by way of illustrative example.

Brief Description of the Drawings

Fig. 1 is a flowchart showing the sequence of purchasing, for example, a soft drink from an automatic vending machine by the use of a prepaid card, according to the present invention;

Fig. 2 shows an alteration of an ID data consisting of seven digits, the final three digits of which are the alterable portion and correspond to the initial three digits of the remaining amount;

Fig. 3 is a block diagram of a system for betting on a horse race by using a prepaid card, according to the present invention;

Fig. 4 is a flowchart of the system for betting on a horse race;

Fig. 5 is a perspective view of communication terminal 13 employed in the system;

Detailed Description of the Preferred Embodiment

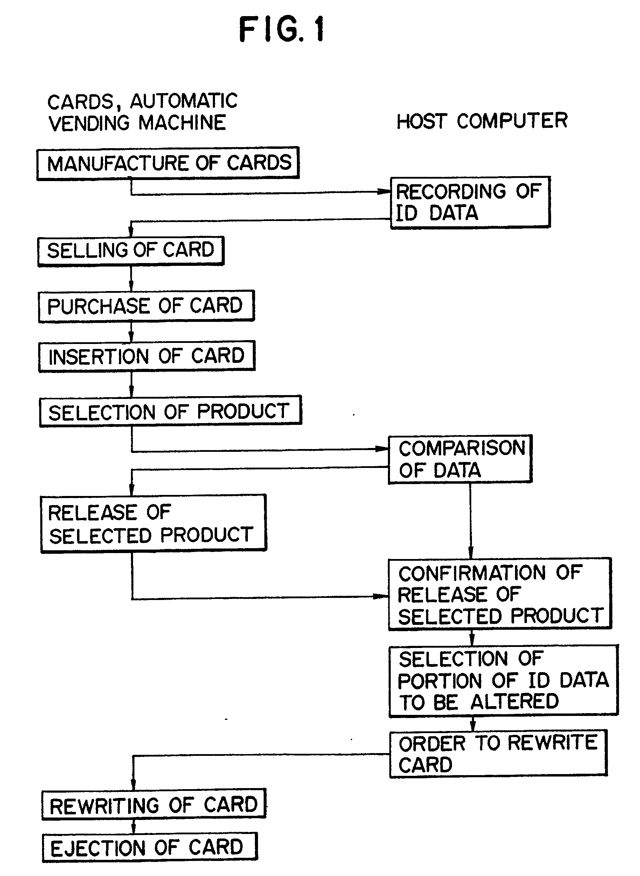

An embodiment according to the present invention, in which, for example, a soft drink is purchased from an automatic vending machine using a prepaid card, will first be described with reference to Fig. 1.

First, prior to the issuance of the prepaid cards, ID data and an amount of money are recorded on each prepaid card, and the recorded ID data are stored in a host computer connected with an automatic vending machine via a communication line. In this case, the ID data consists of a six-digit number (for example, 123456; hereinafter, the figures in parentheses indicate concrete examples), by way of example, the final two underlined digits of which are alterable, and the initial four digits of which are unalterable individual data. In the card, in addition to the ID data, necessary data, including an amount of money, are recorded. These cards can easily be sold in card vending machines for cards similar to those for the present prepaid cards, because no particular operation is required when the prepaid card is issued. The user who purchased a card for purchasing a soft drink inserts the card in the card reader/writer installed in the automatic vending machine. In response to the insertion of the card, the automatic vending machine begins to operate and reads the amount of money and other data in the card. Thereafter, the automatic vending machine ejects those cards with no money reminding, irrelevant cards and the like. Then, the user selects a product among the products sold by the automatic vending machine, whereupon ID data and the amount of money in the card and the data as to the selected product are transmitted to the host computer. The host computer first compares the transmitted ID data with that stored therein, and then confirms other purchasing data, and, if there is no problem, orders the automatic vending machine to release the selected product. In accordance with the order of the host computer, the automatic vending machine releases the selected product. On confirming the release of the selected product, the host ocmputer then orders the automatic vending machine to substract the money (¥200) spent to purchase the product and to alter the final two digits of the ID data (from 56 to 07). The card reader/writer installed in the automatic vending machine then rewrites the ID data in the card and ejects the card, whereby the transaction is ended. The host computer stores the altered ID data (123407) and erases the ID data (123456) before alteration, and thereafter, compares the transmitted ID data with the altered ID data (123407).

Even if there are forged cards copied from the original card, by some method, once one of the forged cards or the original card itself is used, the remaining cards with the same ID data before alteration cannot be used, because the ID data stored in the host computer is altered.

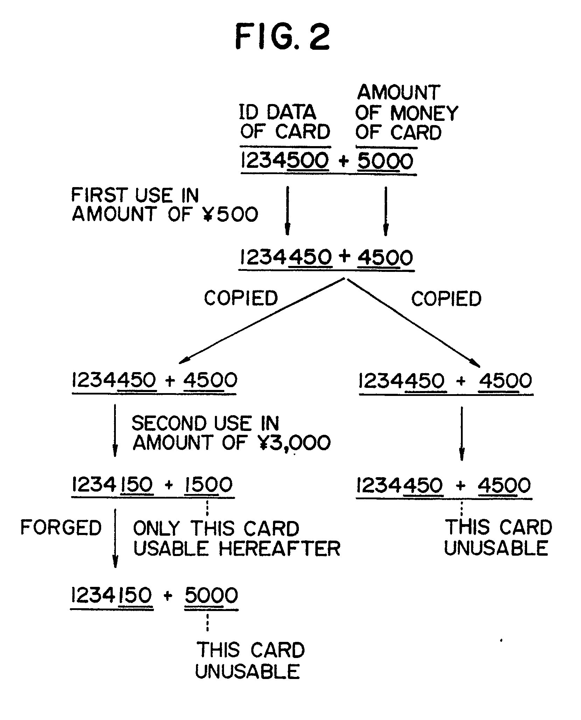

Another embodiment according to the present invention, in which the ID data consists of seven digits, the final three digits of which are an alterable portion and corresponds to the initial three digits of the remaining amount of money, will be described with reference to Fig. 2.

Assuming that the value of the card equals ¥5,000, the final three digits of the ID data at the issuance of the card become 500 (1234500). In the host computer, this number (1234500) is stored as the ID data of this card. When the card is used, the data of the card (ID data, remaining amount of money and the like) are transmitted from the card reader/writer to the host computer, which compares the ID data. In this case, the host computer first compares the initial three digits of the remaining amount of the card with the final three digits in the ID data, and if these do not coincide, the host computer fails to perform subsequent procedures.

Assuming that the card is first used in the amount of ¥500, the final three digits of the ID data become 450 (1234450), and the ID data, in addition to the amount of money and the like, of the card are rewritten. In the host computer, this number (1234450) is stored as the new ID data of the card. At the second use of the card, the ID data is compared with this new ID data. Subsequently, at each use of the card, the ID data in the card and in the host computer are altered. In this embodiment, even if the card is forged in large quantities, the amount of the forged card, whose total amount exceeds the amount when the card was issued, connot be used because the data of the remaining amount of the card is included in the ID data, different from the embodiment shown in Fig. 1. If it is assumed that the card has been copied in large quantities after its first use, a large number of cards with the ID data (1234450) and the remaining amount of money of ¥4,500 are produced. If a purchase of ¥3,000 is carried out through the use of any of the copied cards, then the ID data and the amount of money of the card after this second use are altered, and the remaining amount of money becomes ¥1,500. It is apparent even from the embodiment shown in Fig. 1 that even if someone tries to use the remaining cards previously copied or the original card used for copying, he cannot automatically use them as is because the ID data has been altered. It is now assumed that a forged card with ID data identical (1234150) to that at the second use and with a price of ¥5.000 is produced, the forged card can be used in the embodiment shown in Fig. 1, because the ID data of the forged card coincides with the ID data stored in the host computer. However, the forged card cannot be used in this embodiment, because the remaining amount of money of the card is compared with the final three digits of the ID data. Among the forged cards, only the forged card with the final three digits of the ID data coinciding with the remaining amount of money of the card, i.e., the ID data (1234150) and the remaining amount of money being ¥1,500, can be used. No amount of money exceeding that of the copied card can be used, and hence no benefit can be obtained from forging it. Therefore, the method according the present embodiment virtually prevents the unauthorized use of a card by forgery.

Although an example was explained in which the initial three digits of the remaining amount of money of the card correspond to the portion to be altered, i.e., the final three figures of the ID data, the portion of the ID data to be altered may also consist of all of the amount of money of the card, combinations of the amount of money of the card and randomly sampled data and the like. In either case, it is essential that the ID data of the card be altered with each use of the card, so that the card can be clearly identified at each use.

Furthermore, it is also preferable to utilize a password in addition to the ID data. In this case, the card purchaser is required to designate a password when the card is sold, and the password is stored in the host computer in a manner which corresponds to the ID data. The password is preferably not recorded in the card. When using the card, the cardholder inputs the password in the card reader/writer. The host computer compares the ID data and the password as a whole with those stored therein, and only when these data coincide, does it perform subsequent procedures. With the above method, not only can unauthorized use of a card by copying or forging, but also unauthorized use by a third party of another person's card obtained without permission can be prevented. In the above method, a dedicated card vending machine is needed, because the card purchaser is required to register a password and the password should be stored in the host computer in a manner that corresponds to the ID data of the card.

Data may be recorded in the card electrically, optically, chemically or magnetically. From the standpoint of the cost of manufacturing cards, magnetic cards are preferable. For greater storage capacity, however, IC cards which store data electrically or optical cards which store data optically are more preferable.

A system for betting on a horse race in accordance with the present invention will be explained in detail below as a further embodiment.

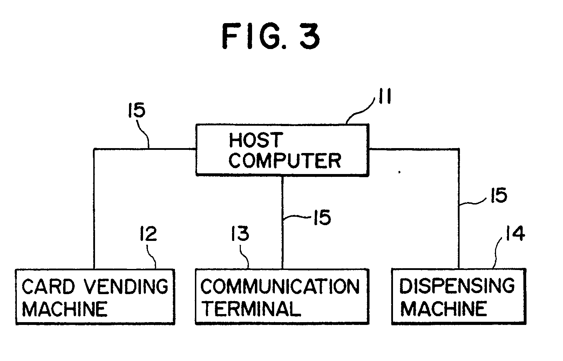

As shown in Fig. 3, the system consists primarily of a card vending machine 12, a communication terminal 13 for placing bets, a host computer 11 and a dispensing machine 14 to dispense winnings when any bet placed on a horse, wins in a race, each being connected via a communication line 15.

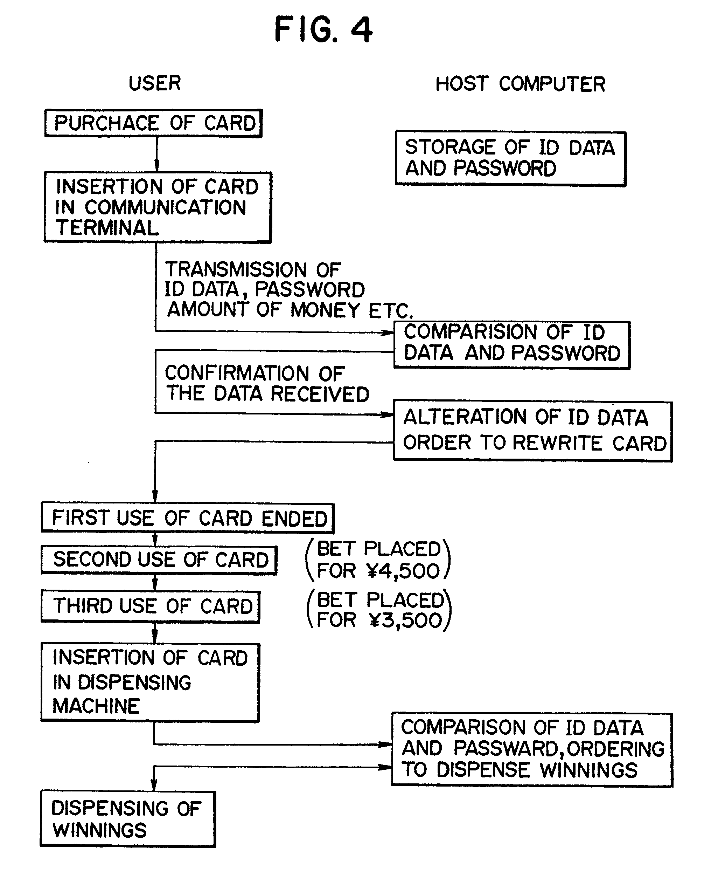

The sequence of placing a bet on a horse race using a prepaid card will be described below in accordance with Fig. 4.

The user buys a prepaid card from the card vending machine 12 at a suitable outlet. The user also registers a password (for example, a number consisting of four digits, 1670). Unalterable individual data (for example, a number consisting of seven digits, 3277881), the initial three figures being the amount of money to buy the card (100, if the amount equals ¥10,000) and randomly sampled data (for example, a number of two digits, 01) are recorded as card ID data in the card. Data for accessing the host computer 11, the amount of money, controlling data and the like are also recorded on the card.

When a card is issued, the card ID data and the password are transmitted via the communication line 15 from the card vending machine 12 to the host computer 11, and are stored in the memory of the host computer 11 as card vending and ID data (327788110001 + 1670).

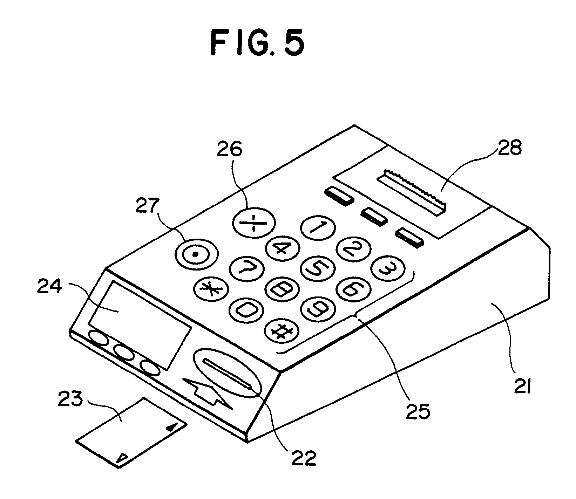

Then, the user inserts the card in the slot 22 of the communication terminal 13 as shown in Fig. 5. In response to the card being inserted, the communication terminal itself 31 begins to operate and reads the data recorded on the card 23 through the use of a card reader/writer contained in the communication terminal 13 and displays the remaining amount of money ¥10,000 on the display screen 24. Then, the user enters first the password (1670) and thereafter various data such as the race data, the race number, the type of bet and the number of bets to be placed, based on a predetermined procedure through the ten-key pad 25. The data thus entered are displayed on the display screen 24. If some entered data are to be corrected, the user then pushes a correction key 26 to erase that data, and thereafter enters new data. After the data have been entered, the user pushes a confirmation key 27, and the data are printed by the printer 28. If the user pushes the confirmation key 27 again after confirming the entered data, the host computer 11 is accessed by the data for accessing the host computer 11 in the card 23. The communication terminal 13 is now connected to the host computer 11 through the communication line 15. Then, the data entered in the communication terminal 13, such as the card ID data (327788110001), the password (1670), the amount of money and the like are transmitted to the host computer 11. The host computer 11 first compares the portion in the ID data originating from the initial three digits of the amount of money in the card with the initial three digits of the amount of money in the card. If both data coincide, then the host computer 11 compares the transmitted ID data and the password with the card vending and ID data in the memory of the host computer 11. If both data coincide, then the host computer 11 temporarily memorizes the data as to the bet, transmitted with the other data and sends back the data as to the bet, to the communication terminal 13. The communication terminal 13 displays the data received by the host computer 11 and the amount of money to purchase the card (for example ¥3,000) on the display screen 24. If the user checks the data on the display screen 24 and finds that there is no error, he presses the confirmation key 27 again. With the confirmation, the bet is registered and subtraction of the amount of money to be paid from the amount of money recorded in the card, i.e., the rewriting of the amount of money recorded in the card, and the alteration of the ID data, are ordered. If 83 is selected as a portion of the randomly sampled data, the ID data in the card 23 becomes 327788107083, and the amount of money in the card becomes ¥7,000, The rewriting of the ID data is also executed (327788107083) in the host computer 11. The password remains unaltered.

The second time the card is used, the transmitted ID data is compared with the new altered card ID data and the same procedure is executed. If a bet is placed for ¥4,500 and the randomly sampled data becomes 41, then the ID data in the card 23 becomes (327788103541) and the card ID data in the memory of the host computer 11 becomes (327788103541 + 1670). In case any bet placed on a horse wins in a race to provide a winnings, for example, a winnings amounting to ¥5,000 at this stage, the host computer 11 memorizes (327788103541 + 1670 + 5000) in the memory as the card ID data and the amount of the winnings.

If a bet is placed for ¥3,500 the third time the card is used, and the randomly sampled data becomes 53, then the ID data in the card 23 becomes (327788100053) and the card ID data and the amount of winnings in the memory of the host computer 11 becomes (327788100053 + 1670 + 5000). In other words, the remaining amount of money in the card becomes (0) and the portion of the card ID data originating from the amount of money of the card becomes (000). The host computer 11 is so designed that it does not receive a communication from a card with that portion in the card ID data being (000), except in the case of dispensing winnings, so that bets can no longer be placed through the use of the card.

It may also be possible to so design the communication terminal 13 is that it does not receive a communication from the card with said portion being (000) and to compare the portion in the card ID data originating from the initial three digits of the amount of money in the card with the initial three digits of the amount of money in the card. Furthermore, the communication terminal 13 can also be designed for a card user's exclusive use, with a password recorded therein, and can comapre ID data and the password, and only when ID data and the password coincide, communicate with the host computer 11. This reduces the load on the host computer 11.

When the user wants a winings to be refunded, the user inserts the card in the dispensing machine 14 and inputs the password. Then, the ID data (327788100053) in the card 23 and the password are transmitted to the host computer 11 and compared with the card ID data (327788100053 + 1670 + 5000). In the above case, both data coincide, so that the total amount of the winnings, ¥5000, is paid.

Even if someone obtains another person's card with a winnings and tries to have the winnings dispensed without permission, it would be almost impossible because the password must be inputted in the dispensing machine, thereby preventing this unauthorized use of the card. Furthermore, even if the card before a winnings is dispensed is copied in large quantities, once the dispensing is executed using any one of the copied cards or the original card, dispensing using any of the remaining cards is impossible, thereby preventing such unauthrorized acts dispensing a winning by a forged betting ticket, which is now a problem.

As described above, if somone copies a card for placing a bet on a horse race (a card with a value of ¥10,000) which he placed in large quantities and tries to place a bet on a horse with a value greater than ¥10,000 using the copied card, he cannot place a bet with the value greater than the amount of money in the card when it was issued, even if he forged the card in various ways, because a portion of the amount of money in the card is included in the ID data, and is compared with the amount of money in the card. Therefore, forging cards has no merit.

Furthermore, since the ID data consists of three portions, i.e., card individual data, data originating from the amount of money in the card and randomly sampled data, even if some one forges cards utilizing some number, it is almost impossible for him to use them, becasue there is a very small chance that the ID data in the card will coincide with that stored in the memory of the host computer. The illegal use of a card by forging is thus prevented.

Any kind of communication line may be employed as the communication line 15 to connect the host computer 11 with the communication terminal 13, the card vending machine 12 and the dispensing machine 14, so long as it performs the functions of the present invention described above. However, an existing telephone line is preferably employed as the communication line 15 to connect the host computer 11 with the communication terminal 13 and the card vending machine 12, particularly with the communication terminal 13. If an existing telephone line is employed, a large number of people can utilize the system for betting on horse races according to the present embodiment with only a small investment required for equipment, since the system can be set up is simply by connecting communication terminals to existing telephones in widespread use.

While the present invention has been described primarily with regard to systems for purchasing soft drinks and placing bets on horse races through the use of prepaid cards, the present invention is also applicable to various systems which employ card-type information media and require the settlement of accounts.

Although certain preferred embodiments have been shown and described, it should be understood that many changes and modifications may be made therein without departing from the scope of the appended claims.

## Claims

1. A method for preventing the unauthorized/illegal use of a card-type information medium comprising the steps of:
registering discrete identification data in each card-type information medium from which data can be read and on which data can be written,
storing in advance said identification data in a host computer connected with a reader/writer of said information medium via a communication line, for processing data in line with an object of said information medium,
reading said identification data from said information medium by means of said reader/writer when said information medium is used, to transmit said identification data to said host computer,
comparing in said host computer said transmitted identification data with identification data stored therein, and if both data coincide,
initiating in said host computer, a predetermined procedure in accordance with said object of said information medium,
altering at least a portion of said identification data,
storing said altered identification data in said host computer in place of said identification data as new identification data, and
rewriting by said reader/writer, said identification data stored in said information medium by said new identification data.

2. A method according to Claim 1, wherein the alteration of at least a portion of said identification data is implemented by said host computer, said host computer transmitting said altered identification data to said reader/writer.

3. A method according to Claim 1, wherein the alteration of at least a portion of said identification data is implemented by said reader/writer, said reader/writer transmitting said altered identification data to said host computer.

4. A method according to any one of claims 1 - 3, wherein said identification data include at least unalterable data.

5. A method according to any one of claims 1 - 4, wherein when the alteration of said identification data is implemented, at least a part of said portion of said identification data to be altered is selected at random.

6. A method according to any one of claims 1 - 5, wherein when the alteration of said identification data is implemented, data on at least a part of said portion of said identification data to be altered is selected by random sampling.

7. A method according to any one of claims 1 - 6, wherein data indicating the limit of the amount of value up to which said information medium can be used, is recorded in said information medium, and at least a part of said portion of said identification data to be altered correspond to at least of a portion of said limit.

8. A method according to any one of Claims 1 - 7, wherein a password is recorded in said host computer or said reader/writer, and when said information medium is used, if a user inputs said password into said reader/writer, said host computer or said reader/writer compares said inputted password with said recorded password.

9. A method according to claim 8, wherein said password is not recorded in said information medium.

10. A method according to any one of Claims 1 - 9, wherein said information medium is a prepaid card.

11. A method according to any one of Claims 1 - 10, wherein said communication line is a telephone line.

# FIG. 1

CARDS, AUTOMATIC
VENDING MACHINE

HOST COMPUTER

MANUFACTURE OF CARDS

RECORDING OF
ID DATA

SELLING OF CARD

PURCHASE OF CARD

INSERTION OF CARD

SELECTION OF PRODUCT

COMPARISON
OF DATA

RELEASE OF
SELECTED PRODUCT

CONFIRMATION OF
RELEASE OF
SELECTED PRODUCT

SELECTION OF
PORTION OF ID DATA
TO BE ALTERED

ORDER TO REWRITE
CARD

REWRITING OF CARD

EJECTION OF CARD

# FIG. 2

ID DATA OF CARD — AMOUNT OF MONEY OF CARD

1234500 + 5000

FIRST USE IN AMOUNT OF ¥500

1234450 + 4500

COPIED / COPIED

1234450 + 4500 ............ 1234450 + 4500

SECOND USE IN AMOUNT OF ¥3,000

1234150 + 1500 ............ 1234450 + 4500

FORGED | ONLY THIS CARD USABLE HEREAFTER ............ THIS CARD UNUSABLE

1234150 + 5000

THIS CARD UNUSABLE

# FIG. 3

# FIG. 4

USER                                                    HOST COMPUTER

| PURCHACE OF CARD |

                                                        | STORAGE OF ID DATA
                                                        AND PASSWORD |

| INSERTION OF CARD
IN COMMUNICATION
TERMINAL |

        TRANSMISSION OF
        ID DATA, PASSWORD
        AMOUNT OF MONEY ETC.

                                                        | COMPARISION OF ID
                                                        DATA AND PASSWORD |

        CONFIRMATION OF
        THE DATA RECEIVED

                                                        | ALTERATION OF ID DATA
                                                        ORDER TO REWRITE CARD |

| FIRST USE OF CARD ENDED |

| SECOND USE OF CARD |          $\left(\begin{array}{l}\text{BET PLACED}\\\text{FOR ¥4,500}\end{array}\right)$

| THIRD USE OF CARD |           $\left(\begin{array}{l}\text{BET PLACED}\\\text{FOR ¥3,500}\end{array}\right)$

| INSERTION OF CARD
IN DISPENSING
MACHINE |

                                                        | COMPARISON OF ID DATA
                                                        AND PASSWARD, ORDERING
                                                        TO DISPENSE WINNINGS |

| DISPENSING OF
WINNINGS |

# FIG. 5